# EUROPEAN PATENT SPECIFICATION

(11) **EP 0 341 880 B1**
(45) Date of publication and mention of the grant of the patent: **20.04.1994**
(21) Application number: 89304370.3
(22) Date of filing: 28.04.1989
(51) Int. Cl.: B29C 45/16

(54) **A multi-injection molded body, a method of molding and a molding machine**
Durch mehrfaches Spritzgiessen geformter Körper, Giessverfahren und Giessmaschine
Corps moulé par injection multiple, procédé de moulage et machine de moulage

(30) Priority: 11.05.1988 JP 114453/88
(43) Date of publication of application: 15.11.1989
(73) Proprietor: NISSEI JUSHI KOGYO KABUSHIKI KAISHA, Hanishina-gun Nagano-ken (JP)
(72) Inventor: Kanai, Toshiyuki c/o, Nissei Jushi Kogyo K. K., Hanishina-gun Nagano-ken (JP); Shinnoh, Nobuo c/o, Nissei Jushi Kogyo K. K., Hanishina-gun Nagano-ken (JP)
(74) Representative: Stuart, Ian Alexander

(56) References cited:
- FR-A- 2 550 848
- US-A- 2 609 570

## Description

The present invention relates to a multi-injection molded body, a method of molding for the same, and a multi-injection molding machine. It particularly relates to a multi-injection molded body comprising two kinds of resin or more, a method of molding for the same, and a multi-injection molding machine for the same.

Recently, cars, home electric appliances, cameras, containers etc. are required to lighten their weight, so parts for machines and appliances are now made not of metals but of plastics.

Parts made of plastics consist of a plurality of molded bodies (described as first molded body or bodies in the following description). Sealing parts (described as second molded body or bodies in the following description), which are made of such elastic polymers as silicone gum, urethane gum, styrene-butadiene gum, etc., are provided in assembling sections between the parts made of plastics so as to keep sealing, absorbing or nonskid capability.

Conventionally, the second molded bodies are independently molded besides the first molded bodies, then they are manually assembled to the first molded bodies. Therefore, there were disadvantages of lower assembling precision and increasing assembling steps. To solve these disadvantages, there were disclosed a method of multi-injection molding in Japanese Provisional Publication (Kokai) Gazette 60-52322 or Japanese Provisional Publication (Kokai) Gazette 63-104809. The method comprises steps of molding a first molded body having a concave section on the surface thereof by injection molding, and injecting an elastic polymer for forming a second molded body in the concave section. In this conventional method, multi-injection molded bodies consisting of the first molded body and the second molded body are molded in one injection molding step, so that assembling precision can be increased, and assembling steps can be reduced.

The first molded bodies are, however, molded by injection molding. Thus walls of concave sections must be formed approximately vertical from the bottom faces to permit removal of products from molding machines easily. Therefore, second molded bodies molded in concave sections of first molded bodies can be pulled out easily because there are provided no catching means on wall faces of concave sections. To fix second molded bodies in concave sections of first molded bodies, as disclosed in JP-A-63-104809, reactive elastomer layers, primer layers, etc. should be formed between inner bottom faces of concave sections of first molded bodies and bottom faces of second molded bodies to adhere them.

US-A-2,609,570 discloses forming a multipart plastic article by producing a first plastic part with upstanding pillars; lowering onto this a mold part having chisels in register with the pillars so as to split and spread apart their upper regions; and injection molding a second plastic part onto the first part, so that it surrounds the splayed pillars which thereby lock the two parts together.

Embodiments of the present invention may enable one to provide multi-injection molded bodies, which consist of first and second molded bodies molded by injection molding and whose second molded bodies are tightly fixed in concave sections of first molded bodies without adhering layers; a method of molding for the same; and a multi-injection molding machine therefor.

Inventors have studied to make this possible. They found that catching means could be formed on the wall surfaces of the concave section of the first molded body by steps of forming an undercut section by pressing rims or walls of the concave section to project the rims of the walls into the concave section then injecting resin melt for forming the second molded body into the concave section of the first molded body, so that the second molded body could be tightly fixed to the first molded body.

Thus in one aspect the present invention provides a multi-injection molded body comprising at least a first molded body mainly made of a first resin and a second molded body mainly made of a second, non-compatible resin; and wherein an annular recess is provided on the face of the first molded body which adjoins said second molded body; said recess having a section with a pair of rim portions rising from respective sides of a bottom face portion; and said second resin is injected into said recess to form a part of said second molded body; characterised in that at least one of the rim portions is shaped so that, all around the recess, the rim portion projects into the recess to form an undercut section.

In a second aspect the invention provides a method for molding a multi-injection molded body, which includes at least a first molded body mainly made of a first resin and a second molded body mainly made of a second resin, comprising the steps of:
molding said first molded body having a recess on the joint face joining to said second molded body:
forming an undercut section in said recess by pressing at least a part of the rim of said recess of said first molded body to project the wall into said recess; and
injecting said second resin into said recess and a cavity of a mold.

In a third aspect the invention provides a multi-injection molding machine for molding a multi-injection molded body including at least a first molded body mainly made of a first resin and a second molded body mainly made of a second resin, said machine having a set of mold components from which are selectable:
a first pair of mold components for defining a mold cavity for molding said first molded body which has a recess of the joint face thereof joining to said second molded body;
a pressing component having a pressing section for pressing at least a part of the rim of said recess of said first molded body to project the wall into the recess to form an undercut section; and
a second pair of mold components for accommodating said first molded body, and defining a mold cavity for molding said second molded body,
whereby said second resin is injectable into the cavity of said second pair of molds and said recess.

In the method of the present invention, forming the undercut section in the recess of the first molded body A can be effected simply by pressing the rim(s) of the concave section thereof with a projecting section of the mold, or by pressing a projecting section previously formed on the rim of the recess, or by pressing at least one side wall of the recess. If the second resin melt for molding the second molded body is injected while pressing all around the rims of the recess, the considerable tendency of forming flash in the vicinity of the second molded body is effectively overcome, even if the second molded resin is a material of quite small surface tension such as silicone gum.

In the injection molding machine of the present invention, if the pressing section of the pressing component is a projecting section or is capable of pressing at least a part of the walls of the recess, then the undercut section can be easily formed in the recess. Suitably said first pair of mold component define a mold cavity adapted to mold a first molded body having a projecting section in the vicinity of said recess. Preferably one of said first pair of molds is arranged so that said first molded body is left when said first molds are opened, and it serves also as one of said second pair of molds. The present invention is especially suitable for use with resins that are incompatible, the second resin being an elastic polymer e.g. a sealing part, absorbing part or nonskid part.

Embodiments of the invention will now be described by way of example and with reference to the accompanying drawings, in which:
Fig. 1 shows a perspective view and a sectional view of an embodiment of a multi-injection molded body of the present invention;
Figs. 2-4 show explanation views to explain the method of molding for the multi-injection molded body of the present invention;

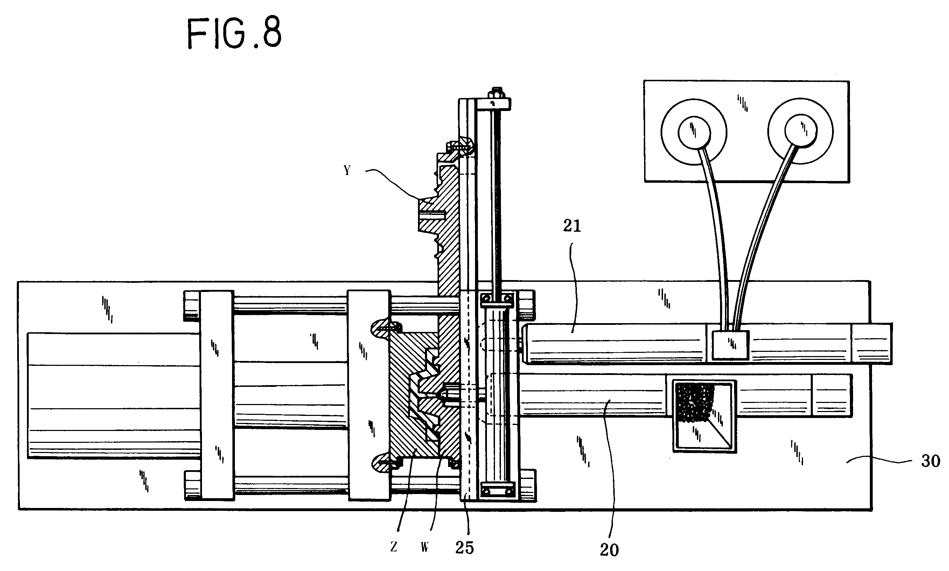

Figs. 6-8 show explanation views to explain a multi-injection molding machine of the present invention;
Figs. 9-16 show explanation views of other embodiments of the present invention; and Fig. 17 shows a perspective view of another embodiment of the multi-injection molded body of the present invention.

The present invention will now be explained with reference to drawings.

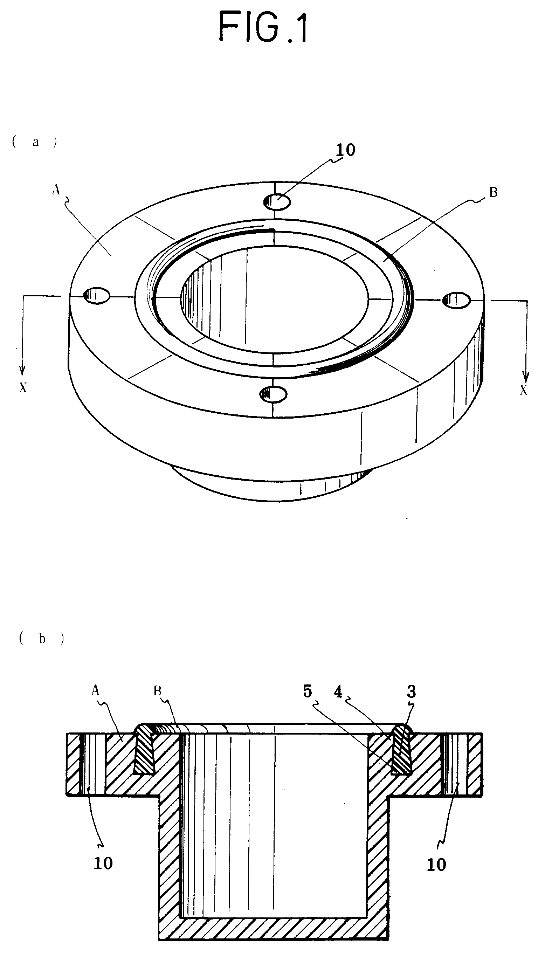

Fig. 1(a) shows a perspective view of an example of the multi-injection molded body of the present invention, and Fig. 1(b) shows a sectional view of the multi-injection molded body of Fig. 1 taken along the line X-X of Fig. 1(a).

In Fig. 1, in a flange section of a first molded body A which is made of a first resin (e.g. nylon-6 including glass fiber), a seal ring as a second molded body B made of a second resin (e.g.silicone gum) is provided and a plurality of though-holes 10 are bored therein.

There is formed a concave section 3 on the joint face of the first molded body A joining to the second molded body B. The upper section of the walls of the concave section 3 is narrower than the lower section thereof, so the sectional shape of the concave section 3, as show in Fig. 1(b), is so called inverted-tapered shape and the width of the opening 4 of the concave section 3 is the narrowest; the width of the bottom section of the concave section 3 is the widest. Therefore, the section 5 is formed as the undercut section. In the concave section 3, silicon gum as the second resin is filled therein, and the second resin forms a part of the second molded body B. Therefore, a part of the second molded body is attached in the concave section 3 having the undercut section in the bottom section 5, so projected section of the opening 4 of the concave section 3 is formed as catching means to catch the second molded body B, then the second molded body B is tightly fixed in the concave section 3 by the undercut section.

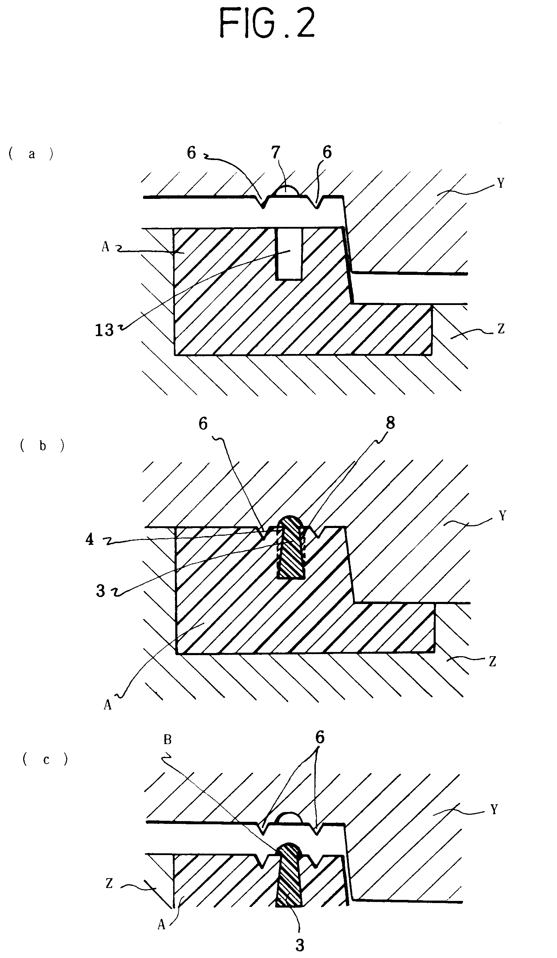

The multi-injection molded body A is molded by the method shown in Fig. 2.

Namely, first, the first molded body A having the concave section 13 is left in a mold Z of a pair of molds for molding the first molded body A [see Fig. 2(a)]. The concave section 13 of the first molded body A is opened on the upper face thereof. The sectional shape of the concave section 13 is, as shown in Fig. 2(a), a rectangle and its side walls are formed approximately vertical to the inner bottom face of the concave section 13, so that another mold, which molds the first molded body A with the mold Z, can easily leave from the first molded body A during mold opening then the first molded body A can be left in the mold Z.

Next, the rims of the first molded body A are pressed by clamping a mold Y, which has projecting sections 6 and a cavity 7 for molding the second molded body, and the mold Z in which the first molded body A has been left therein [Fig. 2(a),(b)].

Both side walls of the concave section 13 are projected toward the inside thereof. The length of the projection is, as shown by numeral 8 in Fig. 2(b), that the width of the upper section is longer than the width of the lower section, so that sectional view of the concave section transforms into inverted-tapered shape. Then an undercut section is formed in the vicinity of the bottom section 5 of the transformed concave section 3, so that catching means is formed at opening 4 of the concave section 3.

Next, the second resin is injected into the concave section 3 and the cavity 7 of the mold Y, then the molds Y and Z are opened. The multi-injection molded body consisting of the first molded body A and the second molded body B which is tightly fixed in the concave section 3 is gained [Fig. 2(b),(c)].

The second resin for molding the second molded body B has been such resin having lower surface tension as silicone gum.

There is a disadvantage that the second resin having lower suface tension can enter quite narrow gap (e.g. 5µ), so that flashes are easily formed around the second molded body B.

In this embodiment, sealing ability around the concave section 3 can be quitely increased by pressing all part of the rims of the concave section of the first molded body A with the projecting sections 6 of the mold Y during injecting the second resin into the concave section 3 and the cavity 7, so that forming flashes around the second molded body B can be prevented.

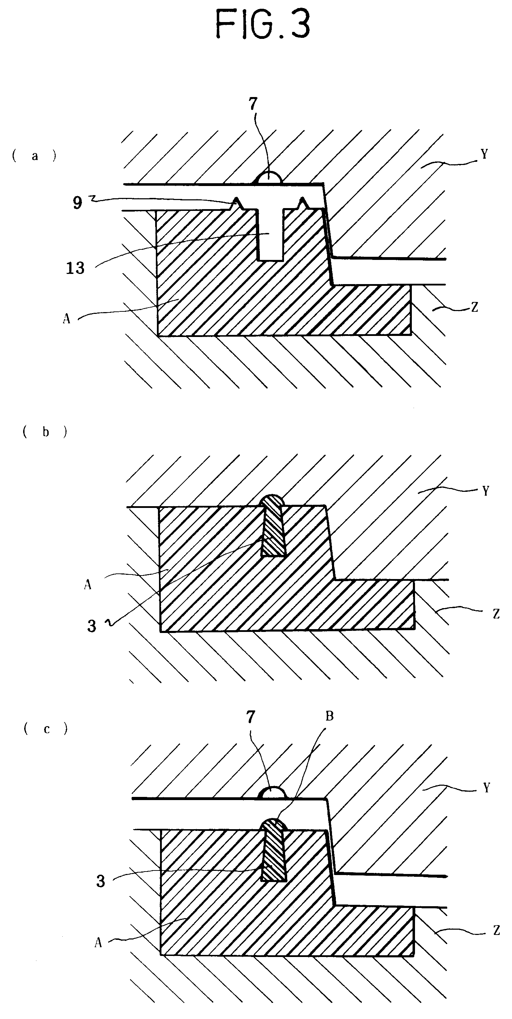

The undercut section can be formed by another method shown in Fig. 3.

First, projecting sections 9 are previously formed in the vicinity of the opening of concave section 13 [Fig. 3(a)]. The concave sections 9 are pressed by the bottom face of a mold Y having a cavity 7 for molding the second molded body [Fig. 3(a),(b)]. In this method, pressed mark on the upper face of the first molded body A can be smaller than the method of pressing by the projecting sections 6 of the mold Y shown in Fig. 2 [Fig. 3(b),(c)].

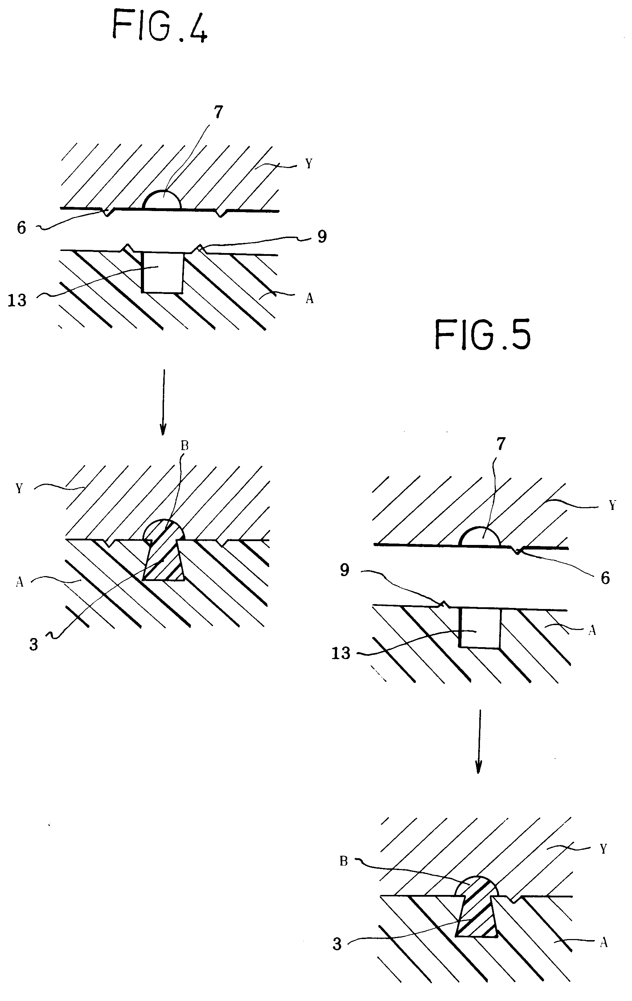

The methods shown in Figs. 2 and 3 can be combined. This embodiment is shown in Figs. 4 and 5.

Fig. 4 shows the method of doubly pressing the rims of the concave section 13 of the first molded body A and the projecting sections 9, which is previously formed in the vicinity of the opening of the concave section 13. While, Fig. 5 shows the method of pressing each side of the opening of the concave section 13. In the above stated methods, the projecting length of the wall of the concave section 13 of the method shown in Fig. 5 can be the longest among them. Note that, in above stated embodiments, the sectional shape of the concave section 13 has been a rectangle, if the mold, which molds the first molded body A with the mold Z, can be easily left the first molded body A, the sectional shape of the concave section 13 may be drawable-tapered shape, half circle, half ellipse, etc.

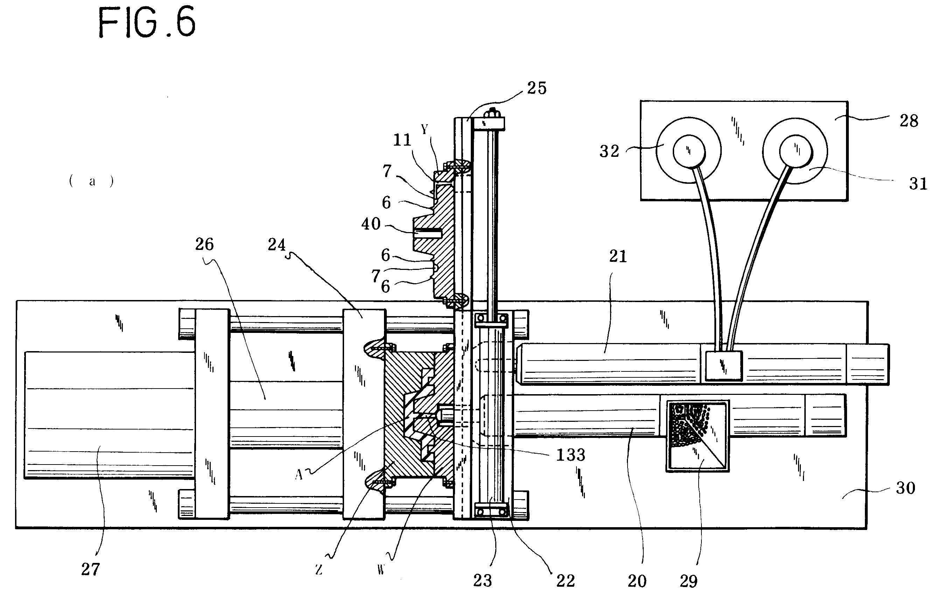

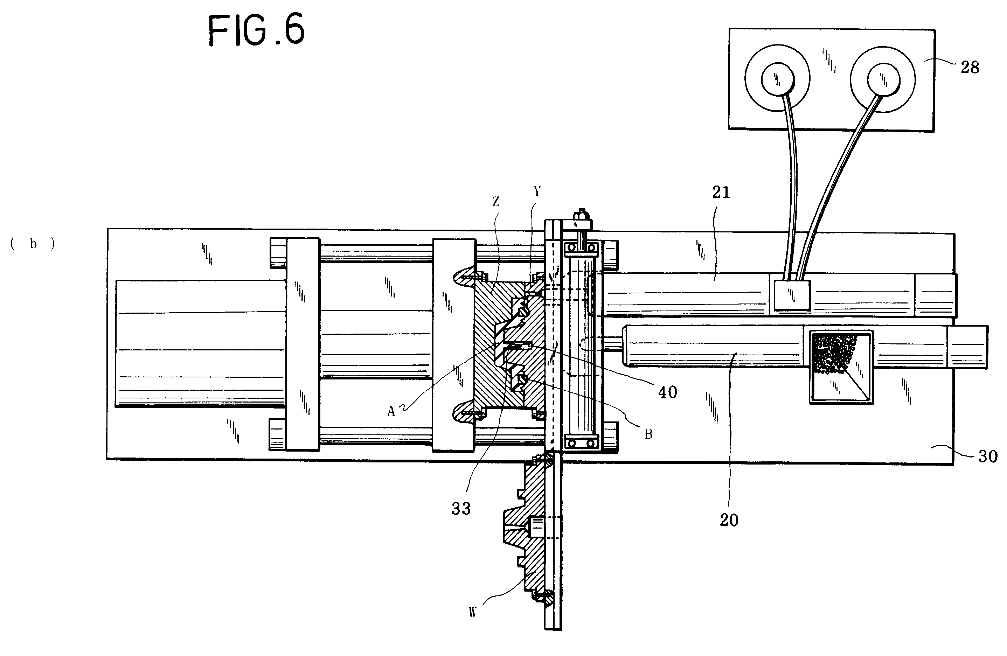

The sectional shape of the projecting section 6 of the mold Y may be wedge shape, half circle, half ellipse, trapozoid, etc. The projecting section 6 and/or 9 may be provided to round the rims of the concave section 13 of the first molded body A to press all of the rims, and also may press at least a part of the rims of the concave sectio 13. Namely, they are required to press in the vicinity of the concave section of the first molded body A to project the walls of the concave section toward inside thereof. If the mold Y can tightly contact the first molded body A, which is left in the mold Z, except the concave section, the walls of the concave section can be easily projected during clamping the molds Y and Z so as to press the rims of the concave section 13 of the first molded body A to form the undercut section. The mold Y, as shown in Fig. 6, may have an injection hole 11, through which the second resin for molding the second molded body B is injected in the cavity 7. Note that, the injection hole 11 may be provided in a mold apart from the mold Y.

Fig. 6 shows a multi-injection molding machine for molding the multi-injection molded body of the present invention.

The injection molding machine shown in Fig. 6 has a first injection device 20 and a second injection device 21 on a base 30. Molds W, Y and Z are provided between a movable board 24 and a fixed board 22. The mold Z is fixed with bolts on the movable board 24 which is moved by a clamping piston 26 slidably attached in a clamping cylinder 27. The mold Z can be closed, clamped or opened with the mold W or Y which are fixed with bolts on a slide board 25. The slide board 25 is slided by an oil cylinder 23 which is provided on the fixed board 22, and it can slide between the position where the mold Z is closed or clamped with the mold W and the position where the mold Z is closed or clamped with the mold Y.

In the injection molding machine shown in Fig. 6, after the molds Z and W were clamped by moving the movable board 24 toward the right with the movement of the clamping piston 26, the first injection device 30 advances and nylon-6 melt including glass fiber is injected into a cavity, which is formed by the molds Z and W, for molding the first molded body.

Pellets of nylon-6 including glass fiber, which are provided through a hopper 29 mounted on the first injection device 20, are melt in the first injection device 20.

After solidification of the injection nylon-6 and moving back of the first injection device 20, the movable board 24 is moved to the left to open the molds Z and W. During mold opening, the concave section 13 of the first molded body A opens on the upper face thereof and the first molded body A is left in the mold Z.

Next, the first molded body A left in the mold Z, as shown in Fig. 6(b), is closed and clamped to the mold Y moved with sliding of the slide board 25. As shown in Fig. 6(a), there are provided the projecting sections 6 around the cavity 7 for molding the second molded body, and the injection hole 11 for injecting such second resin as silicon gum is connected to the cavity 7. There is provided a concave section 40 in approximately center of the mold Y. As shown in Fig. 6(b), the concave section 40 can accommodate a sprue 33 formed on the first molded body A during closing the molds Z and Y. Note that, the sprue 33 is the solidified first resin filled in a resin path 133 connecting the front end of the nozzle of the first injection device to the cavity for molding the first molded body.

The projecting sections 6 of the mold Y press the rims of the concave section of the first molded body A to transform the concave section 13 into the concave section 3 whose sectional shape is inverted-tapered shape. The second injection device 21 is advanced and the silicon gum as the second resin is injected into the concave section 3 and the cavity 7 to mold the second molded body B.

The silicon gum is provided from a plot 31 of a seal supplyer 28 to the second injection device 21 and hardening agent is also provided from the pot 32 thereof to the second injection device 21. Both are mixed in the second injection device 21 and injected into the concave section 3 and the cavity 7. The second resin injected is solidified in the concave section 3 and the cavity 7. The second resin is thermosetting resin, so cooling the second injection device 21 and heating the temperature of the mold Y about 120-150°C are capable of immediate solidification of the second resin in the concave section 3 and the cavity 7 without solidification in the second injection device 21. The temperature range of the mold Y, such heat does not affect the nylon-6 as thermoplastic resin. While, the mold W for molding the first molded body A is preferably kept the temperature about 80-90°C to solidify the first resin immediately.

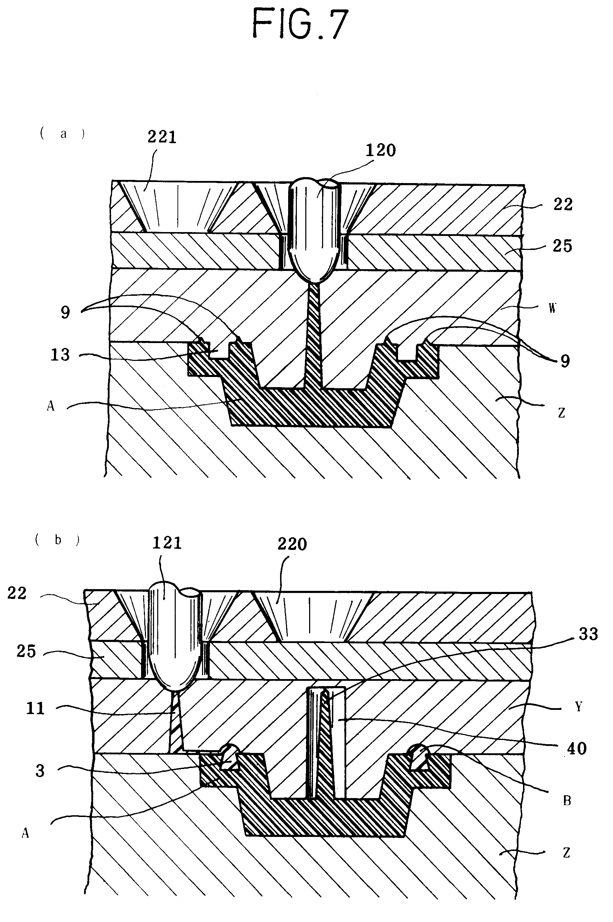

In the injection machine shown in Fig. 6, the rim of the concave section 13 of the first molded body A is pressed by the projecting section 6 of the mold Y, Fig. 7 shows another embodiment. The machine shown in Fig.7 is, as same as the machine shown in Fig. 6, the machine the mold Z and nozzles 120 and 121 moves toward sides during mold slamping and mold opening. Note that, their movement are shown as up and down in Fig. 7 but they indeedly move in the horizontal direction. As shown in Fig. 7(a), the first resin melt is injected into the cavity for molding the first molded body formed by the molds Z and W from the nozzle 120 of the first injection device 20, so that the projeting sections 9 is formed in the vicinity of the rim of the concave section 13 of the first molded body A.

Next, after the opening the molds W and Z, the mold Z in which the first molded body A having the projecting sections 9 has been left and the mold Y which has moved by sliding the slide board 25 are clamped, so that the projecting sections 9 of the first molded body A are pressed by the bottom face of the mold Y, then the sectional shape of the concave section 13 is transformed into the inverted-tapered shape to form the concave section 3 having the undercut section. And then the second resin is injected into the concave section 3 and the cavity for molding the second molded body B. The second resin is injected via the nozzle 121 of the second injection device 21 and the injection hole 11 [Fig. 7(b)]. The mold Y has, as shown in Fig. 7(b), the concave section 40 accommodating the sprue 33 formed on the first molded body A, so that clamping the molds Z and Y can be executed without cutting the sprue 33.

In the machine shown in Fig. 6, the molds W and Y are respectively fixed with bolts on the slide board 25, the molds W and Y may be in one body and fixed thereon. Note that, the slide board 25 can be substituted a rotary board. The rotary board 25 in rotated to travel the molds X and Y to the position for closing to and being clamped with the mold Z.

In the above described embodiments, the both rims of the concave section 13 on the upper face of the first molded body A are pressed to transform the sectional shape. If at least one of walls of the concave section 13 is thin, it is impossible to transform the sectional shape of the concave section 13 by pressing both rims. In that case, the following methods are adaptable.

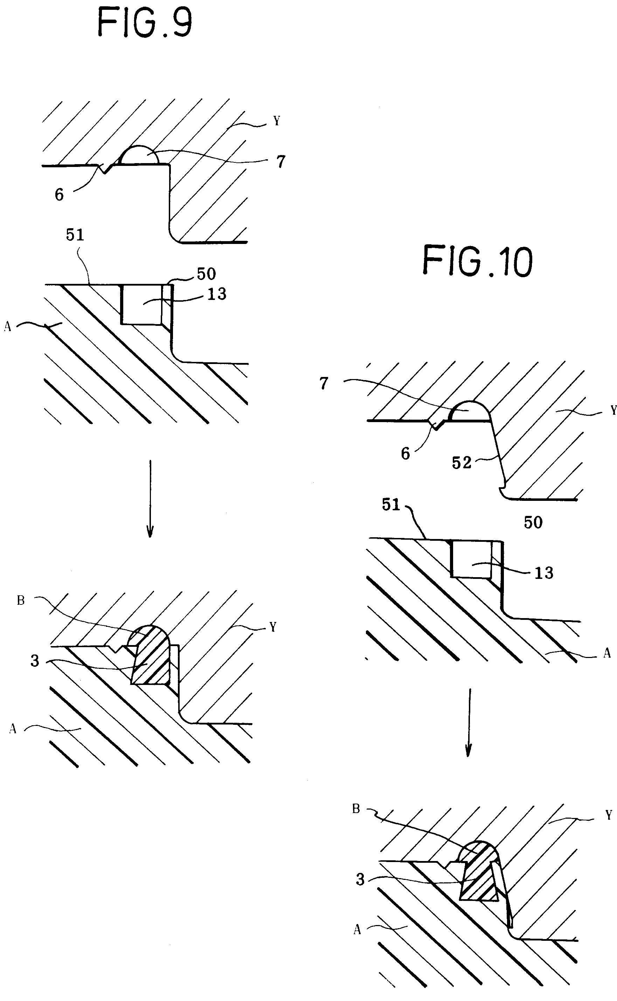

Embodiments shown in Figs. 9 and 10 are the case that one of sides (numeral 50 in Fig. 9) of the concave section 13 is thin, so it is unable to press the one of sides thereof. In this case, it is able to press the upper face of the side 51 to form the undercut section in the concave section 31. In Fig. 10, the face 52, which contacts the thin side 50, is inclined to press the side toward the side 51, while the upper face of the side 51 is pressed by the projecting section 6 of the mold Y, so that the concave section 13 can be transformed into the inverted-tapered shape.

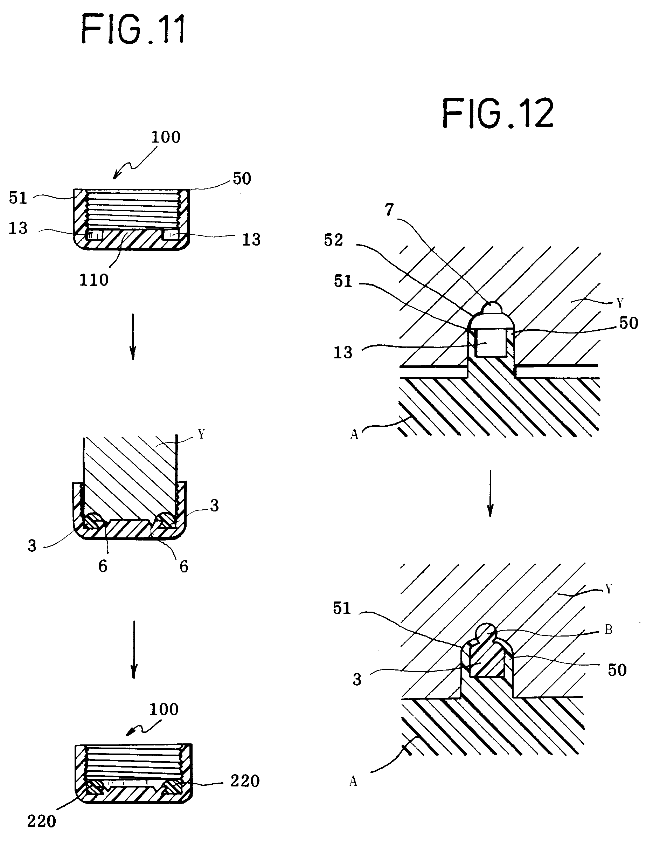

The method shown in Fig. 9 can be applied, as shown in Fig. 11, to mold a cap 100 having a seal 220 on the inner bottom face thereof. Namely, it is impossible to press the upper faces of thin sides 50 and 51 of the concave section 13 of the first molded body but it is possible to form the concave section 3 having the undercut section by pressing the upper face of one of sides 110 of the concave section 13. The method shown in Fig. 10 can be applied, as shown in Fig. 12, to form the concave section 3 having the undercut section by pressing the upper sections of the sides 50 and 51 toward inside by a curved face 52 of the mold Y.

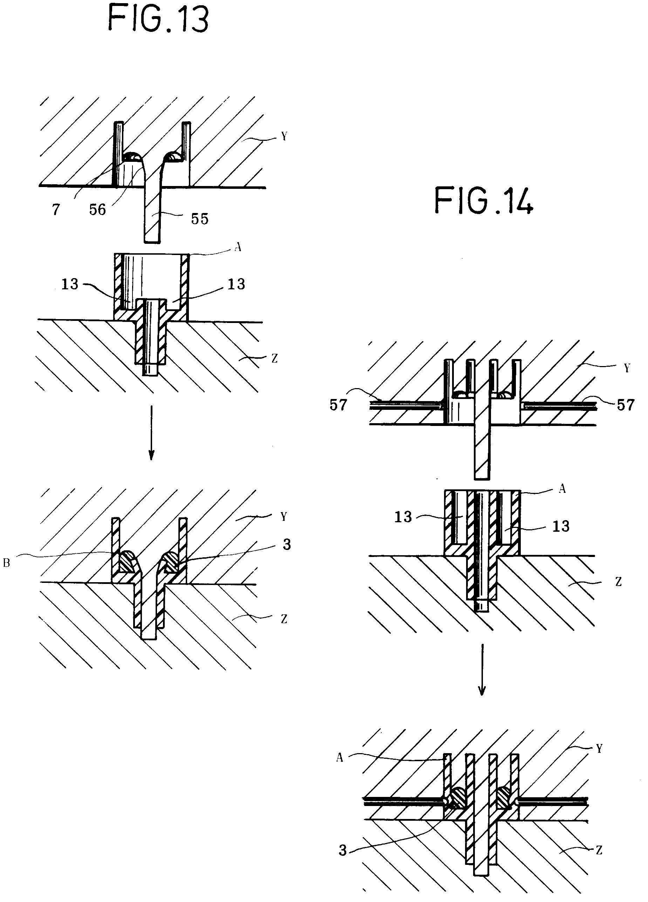

The embodiments shown in Figs. 13 and 14 are methods for molding the second molded body B between an inner pipe and a outer pipe of a double pipe. If the part of the inner pipe can be transformed, as shown in Fig. 13, it is possible to form concave section 3 having the undercut section by transforming the part of the inner pipe toward inside of the concave section 13 by a tapered bottom section 56 of a rod-like projecting section 55 of the mold Y. And if it is impossible to transform the inner pipe, as shown in Fig. 14, it is possible to form the concave section 3 having the undercut section by transforming the wall of the part of the outer pipe toward inside of the concave section by a projecting pin 57 of the mold Y.

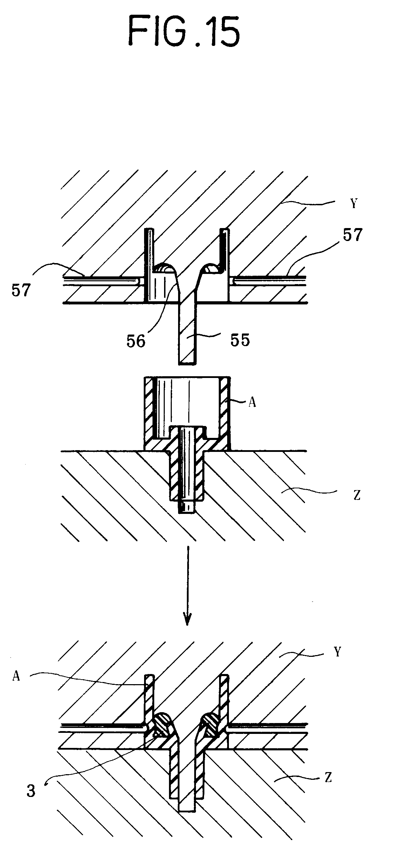

A method combined the methods of Figs. 13 and 14 is shown in Fig. 15. In this method, the undercut section can be certainly formed in the concave section 3, and forming flashes can be prevented during molding the second molded body. Note that, in case of pressing at least one of sides of the concave section 13, it is allowable to press all part of rims or a part thereof.

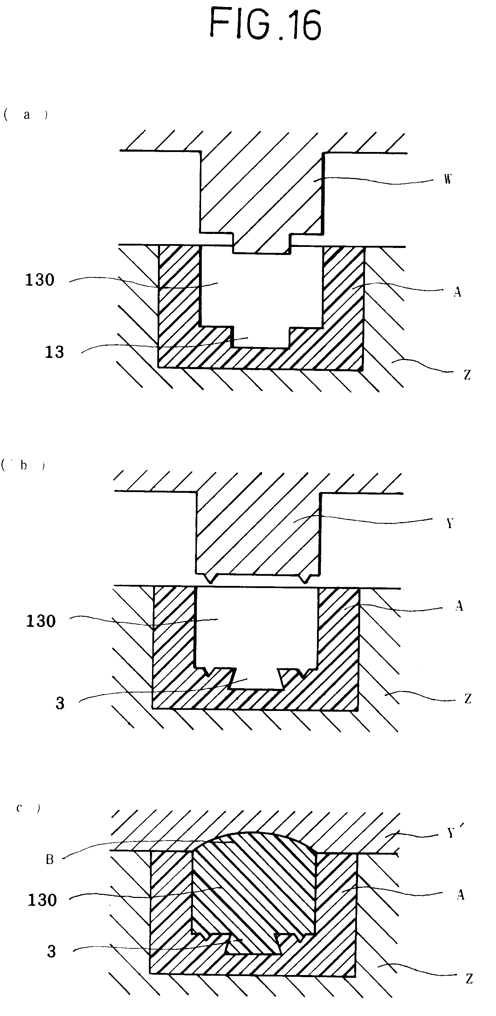

In an embodiment shown in Fig. 16, the concave section of the first molded body A consists of a wide groove 130 and a narrow groove 13 as a double groove. In this case, the resin for molding the second molded body is injected into the wide groove 130 and the concave section 3 after forming the concave section 3 having the undercut section by the rims of the narrow groove 13. This method can be achieved by providing the injection hole 11 (see Fig. 6) in a mold Y′ apart from the mold Y. Namely, it means that an additional mold Y having the injection hole 11 is provided besides the molds W, Y and Z. First, the first molded body A having the concave section like a doule groove, as shown in Fig. 16(a), with the molds W and Z. Next, as shown in Fig. 16(b), the undercut section is formed by pressing the rims of the narrow groove 13 of the first molded body A, which has been left in the mold Z, by the projecting sections 6 of the mold Y to project only the walls of the narrow groove 13 toward inside. Then the second resin is injected into the concave section and the cavity through the injection hole 11 of the mold Y′ to mold the second molded body B as shown in Fig. 16(b) after closing the molds Y′ and Z, so that the first and second molded bodies A and B can be in one body.

In the above described embodiments, nylon-6 of thermoplastic resin is used as the first resin for molding the first molded body A, silicon gum of thermosetting resin is used as the second resin for molding the second molded body B, but many kinds of resins are usable in the present invention. For examle, polyester, polyvinyl chloride, polyethylene, polypropylen, etc. can be used as thermoplastic resins, and epoxy resin, unsatiturated polyester, etc. can be used as thermosetting resin. Combination of the first and second resins is not limitted as thermosetting resin and thermoplastic resin. In case of using thermoplastic resin as the first and second resin, mutually non-compatible resins (e.g. polyester and polypropylen) can be used to mold the multi-injection molded body.

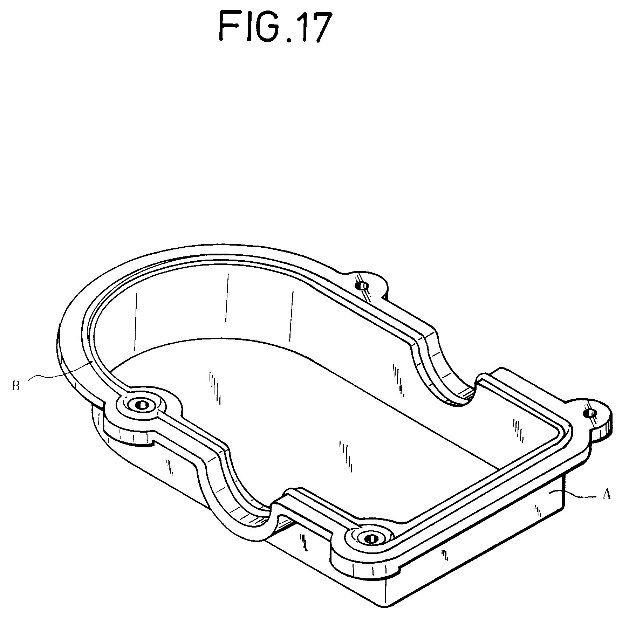

In the present invention, it is possible to fix sealing material as the second molded body B made of elastic polymer tightly to such complex first molded body as shown in Fig. 17 by injection molding. The second molded body B shown in the Fig. 17 is used as the sealing material, it is also possible to use as an absorbing material or a nonskid material because of its elasticity.

Preferred kind of elastic polymer, of course, can be used with due regard to uses.

In this embodiment, the injection molding machine is a side stroke type whose movable board 24 moves in the horizontal direction, the present invention can be applied to a vertical storoke type machine whose movale board moves in the vertical direction.

In the present invention, it is easy to mold a multi-injection molded body whose second molded body (e.g. sealing, absorbing or nonskid material, etc.) is tightly fixed to complex shaped first molded body by injection mold with preventing forming flashes. Therefore, the step of manually assembling the sealing material, etc. to the first molded body and the step of deflashing can be reduced during the molding process.

## Claims

1. A multi-injection molded body comprising at least a first molded body (A) mainly made of a first resin and a second molded body (B) mainly made of a second, non-compatible resin; and wherein an annular recess (3) is provided on the face of the first molded body (A) which adjoins said second molded body (B); said recess (3) having a section with a pair of rim portions rising from respective sides of a bottom face portion; and said second resin is injected into said recess (3) to form a part of said second molded body (B); characterised in that at least one of the rim portions is shaped so that, all around the recess (3), the rim portion projects into the recess to form an undercut section (5).

2. A multi-injection molded body according to claim 1 wherein said second resin is elastic polymer.

3. A method for molding a multi-injection molded body, which includes at least a first molded body (A) mainly made of a first resin and a second molded body (B) mainly made of a second resin, comprising the steps of:
molding said first molded body (A) having a recess on the joint face joining to said second molded body (B):
forming an undercut section (5) in said recess by pressing at least a part of the rim of said recess of said first molded body (A) to project the wall into said recess (3); and
injecting said second resin into said recess and a cavity (7) of a mold (Y;Y').

4. A method according to claim 3 wherein the recess (3) is annular.

5. A method according to claim 4 wherein said rim is pressed to project into said recess (3) all around it.

6. A method according to claim 3, 4 or 5 wherein the rim of said recess (3) of said first molded body (A) is pressed by a projecting section (6) of the mold (Y) which then serves to define said cavity (7) for injecting said second resin.

7. A method according to claim 3, 4 or 5 wherein a projecting section (9) previously formed on the rim of said recess (3) is pressed to form said undercut section (5).

8. A method according to claim 3, 4 or 5 wherein at least one side wall of said recess (3) is pressed to form said undercut section (5).

9. A method according to any of claims 3-8 wherein said first and second resins are mutually non-compatible.

10. A method for molding a multi-injection molded body according to any of claims 3-9, wherein said second resin is elastic polymer.

11. A multi-injection molding machine for molding a multi-injection molded body including at least a first molded body (A) mainly made of a first resin and a second molded body (B) mainly made of a second resin, said machine having a set of mold components (Z,W,Y;Z,W,Y,Y') from which are selectable:
a first pair of mold components (Z, W) for defining a mold cavity for molding said first molded body (A) which has a recess on the joint face thereof joining to said second molded body (B);
a pressing component (Y or Y') having a pressing section for pressing at least a part of the rim of said recess of said first molded body (A) to project the wall into the recess to form an undercut section (5); and
a second pair of mold components (Y,Z) for accommodating said first molded body (A), and defining a mold cavity (7) for molding said second molded body (B),
whereby said second resin is injectable into the cavity (7) of said second pair of molds (Y,Z) and said recess.

12. A multi-injection molding machine according to claim 11 wherein the pressing means of said pressing component (Y or Y') is a projecting section (6).

13. A multi-injection molding machine according to claim 11 or 12, wherein said first pair of mold component (Z,W) define a mold cavity adapted to mold a first molded body (A) having a projecting section (9) in the vicinity of said recess.

14. A multi-injection molding machine according to claim 11, 12 or 13 wherein said first pair of mold components (Z,W) are adapted for molding a first molded body (A) wherein said recess (13) is bounded on one side by a thin wall (50) of said body (A); and said pressing component (Y) has means (52) for pressing the upper portion of said thin wall (5) inwardly to provide said recess (13) with an undercut section.

15. A multi-injection molding machine according to any of claims 11-14 wherein one of said first pair of molds (Z, W) is arranged so that said first molded body (A) is left when said first molds (Z, W) are opened, and it serves also as one of said second pair of molds (Y, Z).

16. A multi-injection molding machine according to any of claims 11-15 wherein said first pair of molds (Z,W) are adapted to mold a first molded body (A) having a said recess (3) which is annular.

17. A multi-injection molding according to claim 16 wherein said pressing component (6) is adapted to press the rim to project all around the annular recess (3).

## Patentansprüche

1. Körper, der durch mehrfaches Spritzgißen geformt ist, mit: mindestens einem ersten Spritzgußkörper (A), der hauptsächlich aus einem ersten Harz gemacht ist, und einem zweiten Spritzgußkörper (B), der hauptsächlich aus einem zweiten nicht kompatiblem Harz gemacht ist; und bei dem eine ringförmige Ausnehmung (3) auf der Fläche des ersten Spritzgußkörpers (A) vorgesehen ist, die an den zweiten Spritzgußkörper (B) angrenzt; wobei die Ausnehmung (3) einen Abschnitt mit einem Paar von Randabschnitten aufweist, die von den entsprechenden Seiten eines Bodenflächenabschnittes vorstehen; und wobei das zweite Harz in die Ausnehmung (3) zum Bilden eines Teiles des zweiten Spritzgußkörpers (B) eingespritzt wird; dadurch gekennzeichnet, daß mindestens einer der Randabschnitte so geformt ist, daß um die gesamte Ausnehmung (3) der Randabschnitt in die Ausnehmung zum Bilden eines unterschnittenen Abschnittes (5) vorsteht.

2. Körper, der durch mehrfaches Spritzgießen geformt ist, nach Anspruch 1, bei dem das zweite Harz ein elastischer Polymer ist.

3. Verfahren zum Spritzgießen eines durch mehrfaches Spritzgießen geformten Körpers, der mindestens einen ersten Spritzgußkörper (A), der hauptsächlich aus einem ersten Harz gemacht ist, und einen zweiten Spritzgußkörper (B), der hauptsächlich aus einem zweiten Harz gemacht ist, aufweist, mit den Schritten:
Formen des ersten Spritzgußkörpers (A) mit einer Ausnehmung auf der Verbindungsfläche, die an den zweiten Spritzgußkörper (B) angrenzt;
Bilden eines unterschnittenen Abschnittes (5) in der Ausnehmung durch Pressen von mindestens eines Teiles des Randes der Ausnehmung des ersten Spritzgußkörpers (A), so daß die Wand in die Ausnehmung (3) vorsteht; und
Einspritzen des zweiten Harzes in die Ausnehmung und einen Hohlraum (7) einer Gießform (Y; Y').

4. Verfahren nach Anspruch 3, bei dem die Ausnehmung (3) ringförmig ist.

5. Verfahren nach Anspruch 4, bei dem der Rand zum Vorstehen um die gesamte Ausnehmung (3) herumgepreßt wird.

6. Verfahren nach Anspruch 3, 4 oder 5, bei dem der Rand der Ausnehmung (3) des ersten Spritzgußkörpers (A) durch einen vorstehenden Abschnitt (6) der Gießform (Y) gepreßt wird, der dann zum Definieren des Hohlraumes (7) zum Einspritzen des zweiten Harzes dient.

7. Verfahren nach Anspruch 3, 4 oder 5, bei dem ein vorstehender Abschnitt (9), der zuvor auf dem Rand der Ausnehmung (3) gebildet ist, zum Bilden des unterschnittenen Abschnittes (5) gepreßt wird.

8. Verfahren nach Anspruch 3, 4 oder 5, bei dem mindestens eine Seitenwand der Ausnehmung (3) zum Bilden des unterschnittenen Abschnittes (5) gepreßt wird.

9. Verfahren nach einem der Ansprüche 3 bis 8, bei dem das erste und zweite Harz gegenseitig nicht kompatibel sind.

10. Verfahren zum Formen eines durch mehrfaches Spritzgießen geformten Körpers nach einem der Ansprüche 3 bis 9, bei dem das zweite Harz ein elastisches Polymer ist.

11. Mehrfacheinspritzgießmaschine zum Formen eines durch mehrfaches Spritzgießen geformten Körpers mit mindestens einem ersten Spritzgußkörper (A), der hauptsächlich aus einem ersten Harz gemacht ist, und eines zweiten Spritzgußkörpers (B), der hauptsächlich aus einem zweiten Harz gemacht ist, wobei die Maschine einen Satz von Gießkomponenten (Z, W, Y; Z, W, Y, Y') aufweist, aus dem auswählbar sind:
ein erstes Paar von Gießkomponenten (Z, W) zum Definieren eines Gießhohlraumes zum Formen des ersten Spritzgußkörpers (A), der eine Ausnehmung auf der Verbindungsfläche davon aufweist, die an den zweiten Spritzgußkörper (B) angrenzt;
eine Preßkomponente (Y oder Y') mit einem Preßabschnitt zum Pressen von mindestens einem Teil des Randes der Ausnehmung des ersten Spritzgußkörpers (A) zum Vorstehenlassen der Wand in die Ausnehmung zum Bilden eines unterschnittenen Abschnittes (5); und ein zweites Paar von Gießkomponenten (Y, Z) zum Aufnehmen des ersten Spritzgußkörpers (A) und Definieren eines Gießhohlraumes (7) zum Formen des zweiten Spritzgußkörpers (B),
wobei das zweite Harz in den Hohlraum des zweiten Paares von Gießformen (Y, Z) und die Ausnehmung einspritzbar ist.

12. Mehrfacheinspritzgießmaschine nach Anspruch 11, bei der das Preßmittel der Preßkomponente (Y oder Y') ein vorstehender Abschnitt (6) ist.

13. Mehrfacheinspritzgießmaschine nach Anspruch 11 oder 12, bei der das erste Paar von Gießkomponenten (Z, W) einen Gießhohlraum definiert, der zum Formen eines ersten Spritzgußkörpers (A) mit einem vorstehenden Abschnitt (9) in der Nähe der Ausnehmung geeignet ist.

14. Mehrfacheinspritzgießmaschine nach Anspruch 11, 12, oder 13, bei der das erste Paar von Gießkomponenten (Z, W) zum Formen eines ersten Spritzgußkörpers (A) geeignet ist, bei dem die Ausnehmung (13) an einer Seite durch eine dünne Wand (50) des Körpers (A) begrenzt ist; und die Preßkomponente (Y) Mittel (52) aufweist zum Pressen des oberen Abschnittes der dünnen Wand (50) nach innen zum Versehen der Ausnehmung (13) mit einem unterschnittenen Abschnitt.

15. Mehrfacheinspritzgießmaschine nach einem der Ansprüche 11 bis 14, bei der eine des Paares von Gießformen (Z, W) so angeordnet ist, daß der erste Spritzgußkörper (A) belassen wird, wenn die ersten Gießformen (Z, W) geöffnet werden, und die auch als eine des zweiten Paares von Gießformen (Y, Z) dient.

16. Mehrfacheinspritzgießmaschine nach einem der Ansprüche 11 bis 15, bei der das erste Paar von Gießformen (Z, W) so ausgelegt ist, daß ein erster Spritzgußkörper (A) geformt wird, der eine Ausnehmung (3) aufweist, die ringförmig ist.

17. Mehrfacheinspritzgießmaschine nach Anspruch 16, bei der die Preßkomponente (6) so ausgelegt ist, daß sie den Rand so preßt, daß er um die gesamte ringförmige Ausnehmung (3) herum hervorsteht.

## Revendications

1. Corps moulé par injection multiple comprenant au moins un premier corps moulé (A) réalisé principalement à partir d'une première résine et un second corps moulé (B) réalisé principalement à partir d'une seconde résine non compatible ; et dans lequel un évidement annulaire (3) est ménagé sur la face du premier corps moulé (A) qui relie le second corps moulé (B) ; cet évidement (3) ayant une section avec une paire de portions de bord s'élevant à partir des côtés respectifs d'une portion de face inférieure ; et la seconde résine est injectée dans cet évidement (3) pour former une partie du second corps moulé (B) ; caractérisé en ce qu'au moins l'une des portions de bord est de configuration telle que tout autour de l'évidement (3), la portion de bord fait saillie jusque dans l'évidement pour former une section en contre-dépouille (5).

2. Corps moulé par injection multiple selon la revendication 1, dans lequel la seconde résine est un polymère élastique.

3. Procédé pour le moulage d'un corps moulé à injection multiple, qui comprend au moins un premier corps moulé (A) réalisé principalement à partir d'une première résine et un second corps moulé (B) réalisé principalement à partir d'une seconde résine, comprenant les étapes consistant à :
mouler le premier corps moulé (A) présentant un évidement sur la face de liaison reliant le second corps moulé (B) ;
former une section de contre-dépouille (5) dans l'évidement en comprimant au moins une partie du bord de l'évidement du premier corps moulé (A) pour que la paroi fasse saillie dans cet évidement (3) ; et
injecter la seconde résine dans l'évidement et dans une cavité (7) du moule (Y ; Y').

4. Procédé selon la revendication 3, dans lequel l'évidement (3) est annulaire.

5. Procédé selon la revendication 4, dans lequel le bord est comprimé pour faire saillie jusque dans l'évidement (3) tout autour de celui-ci.

6. Procédé selon la revendication 3, 4 ou 5, dans lequel le bord de l'évidement (3) du premier corps moulé (A) est comprimé par une section faisant saillie (6) du moule (Y) qui sert ensuite à définir la cavité (7) pour injecter la seconde résine.

7. Procédé selon la revendication 3, 4 ou 5, dans lequel une section de saillie (9) préalablement formée sur le bord de l'évidement (3) est comprimée pour former la section de contre-dépouille (5).

8. Procédé selon la revendication 3, 4 ou 5, dans lequel au moins une paroi latérale de l'évidement (3) est comprimée pour former la section de contre-dépouille (5).

9. Procédé selon l'une quelconque des revendications 3 à 8, dans lequel les première et seconde résines sont réciproquement non compatibles.

10. Procédé destiné à mouler un corps moulé par injection multiple selon l'une quelconque des revendications 3-9, dans lequel la seconde résine est un polymère élastique.

11. Machine de moulage par injection multiple destinée à mouler un corps moulé par multi-injection comprenant au moins un premier corps moulé (A) réalisé principalement à partir d'une première résine et un second corps moulé (B) réalisé principalement à partir d'une seconde résine, cette machine comportant une série de composants de moule (Z, W, Y ; Z, W, Y, Y') à partir desquels sont sélectionnables :
une première paire de composants de moule (Z, W) pour définir une cavité de moule destinée à mouler le premier corps moulé (A) qui présente un évidement sur sa face de liaison reliant le second corps moulé (B) ;
un composant de compression (Y ou Y') ayant une section de compression pour comprimer au moins une partie du bord de l'évidement du premier corps moulé (A) de façon que la paroi fasse saillie jusque dans l'évidement pour former une section en contre-dépouille (5) ; et
une seconde paire de composants de moule (Y, Z) destinés à loger le premier corps moulé (A) et à définir une cavité de moule (7) pour mouler le second corps moulé (B),
moyennant quoi la seconde résine peut être injectée dans la cavité (7) de la seconde paire de moules (Y, Z) et de l'évidement.

12. Machine de moulage par injection multiple selon la revendication 11, dans laquelle les moyens de compression du composant de compression (Y ou Y') est une section faisant saillie (6).

13. Machine de moulage par injection multiple selon la revendication 11 ou 12, dans laquelle la première paire de composants de moule (Z, W) définit une cavité de moule apte à mouler un premier corps moulé (A) présentant une section de saillie (9) à proximité de l'évidement.

14. Machine de moulage par injection multiple selon la revendication 11, 12 ou 13, dans laquelle la première paire de composants de moule (Z, W) est apte à mouler un premier corps moulé (A) dans lequel l'évidement (13) est lié sur un côté par une paroi mince (50) du corps (A) ; et le composant de compression (Y) présente des moyens destinés à comprimer la portion supérieure de la paroi mince (5) vers l'intérieur pour doter l'évidement (13) d'une section en contre-dépouille.

15. Machine de moulage par injection multiple selon l'une quelconque des revendications 11-14, dans laquelle l'une de la première paire de moules (Z, W) est disposée de telle sorte que le premier corps moulé est laissé en place lorsque les premiers moules (Z, W) sont ouverts et elle sert également comme l'une de la seconde paire des moules (Y, Z).

16. Machine de moulage par injection multiple selon l'une quelconque des revendications 11-15, dans laquelle la première paire de moules (Z, W) est apte à mouler un premier corps moulé (A) avec un évidement (3) annulaire.

17. Moulage par injection multiple selon la revendication 16, dans lequel le composant de compression (6) est apte à comprimer le bord pour faire saillie tout autour de l'évidement annulaire (3).
